# EUROPEAN PATENT APPLICATION

(11) **EP 4 660 696 A1**
(43) Date of publication of application: **10.12.2025**
(21) Application number: 24179751.3
(22) Date of filing: 04.06.2024
(51) Int. Cl.: G02F 1/35, G02F 1/37

(54) **ULTRAVIOLET LASER APPARATUS**

(71) Applicant: Cobolt AB, 171 54 Solna (SE)
(72) Inventor: JANG, Hoon, 171 54 Solna (SE)
(74) Representative: AWA Sweden AB

(57) **Abstract**

A frequency conversion apparatus for conversion of one or more fundamental-frequency waves into a frequency-converted wave is disclosed. The frequency conversion apparatus comprises a non-linear element exhibiting spatial walk off between the fundamental-frequency wave(s) and the frequency-converted wave; and at least one temperature control element configured to maintain a first portion of the non-linear element at a first temperature that provides phase matching for the conversion of the fundamental-frequency wave(s) into the frequency-converted wave, and to maintain a second portion of the non-linear element at a second temperature that does not provide phase matching for the conversion of the fundamental-frequency wave into the frequency-converted wave. Thereby, the frequency-converted wave generated in the first portion of the non-linear element is spatially separated from the fundamental-frequency wave by spatial walk off such that the frequency-converted wave and a non-converted portion of the fundamental-frequency wave(s) exit the non-linear element at spatially separated locations.

## Description

### Technical field

The present disclosure relates to ultraviolet lasers, and in particular to generation of ultraviolet laser light by frequency conversion of fundamental laser light.

### Background

Ultraviolet (UV) laser light can be generated by non-linear conversion of fundamental laser light of longer wavelengths. For example, one way of generating UV laser light is by frequency-doubling of light at 532 nm to obtain UV light at 266 nm. The fundamental laser light at 532 nm in such process may itself be the result of frequency-doubling of laser light at 1064 nm. As generally known in the art, 1064 nm is a common wavelength that can be obtained, for example, from a Nd:YAG laser. UV laser light can also be generated by sum-frequency generation (SFG), e.g. mixing 1064 nm and 532 nm to get 355 nm.

A problem that has been recognized in the art is the formation of UV induced deposits on optical surfaces that are exposed to the UV light, sometimes referred to as laser-induced contamination (LIC). It is believed that such deposits form due to photo-fixation or polymerization of various contaminants (particularly carbon-containing contaminants) present in gaseous form at the optical surfaces. The contaminants may originate from out-gassing of material from, for example, adhesives. The deposits may build up over time and introduce losses for the optical beam, which is particularly problematic for resonators where even a small loss may lead to serious degradation of the resonant field.

When generating UV laser light, e.g., at 266 nm, from fundamental laser light at, e.g., 532 nm, a non-linear element is used. Provided that phase-matching is provided, the amount of frequency-converted light will increase as the fundamental light propagates through the non-linear element. Both the fundamental light and the frequency-converted light need to exit the non-linear element at some point, and if no special measures are taken, the fundamental light and the frequency-converted light will typically exit the non-linear element at a common point and also strike mirrors and/or beam splitters at a common point. Hence, any build-up of deposits on the surface of optical elements caused by the UV laser light will then also affect the fundamental laser light. In other words, any deposits induced by the generated UV laser light will introduce a loss for the fundamental laser light. If the frequency conversion is effected in a cavity that is resonant to the fundamental laser light, any such loss may seriously deteriorate the resonator and cause the power of the circulating fundamental light to drop, thereby reducing the conversion to UV light.

Attempts have been made in the prior art to separate the UV laser light from the fundamental laser light using inclined dichroic mirrors or by having an arrangement for periodically moving the optical elements as degradation takes place on parts exposed to the UV laser light. One prior art example can be found in US 2007/0258688 A1.

### Summary

To address the problem of UV induced deposits, it is proposed herein to take measures in order to spatially separate the fundamental laser light from the generated UV laser light such that the fundamental light and the UV light exit the non-linear element at separate locations. Thereby, the UV laser light can be made to exit the non-linear element at one or more locations that are not traversed by the (resonant) fundamental laser light, and any build-up of deposits caused by the UV laser light will thus not adversely affect the resonance conditions for the fundamental laser light. Such separation between the fundamental laser light and the UV laser light at the exit from the non-linear element also facilitates a design of a frequency conversion apparatus where the fundamental beam is reflected from a cavity mirror at a location that is spatially separated from a location where the UV laser light reaches the cavity mirror.

In particular, it is proposed herein to use a birefringent non-linear element/crystal for the generation of UV laser light, wherein the non-linear crystal exhibits spatial walk-off. The temperature of the non-linear crystal is controlled such that a first portion of the non-linear crystal is maintained at a temperature that provides phase-matching for the conversion of fundamental laser light into UV laser light, and a second portion of the non-linear crystal is maintained at a temperature that does not provide phase matching for the conversion into UV laser light. Thereby, UV laser light generated in the first portion of the non-linear crystal will, during propagation through the second portion, become separated from the fundamental laser light due to the spatial walk-off.

Spatial walk-off in connection with frequency conversion is a phenomenon that emerges due to angle-tuning of the non-linear element, where light of extraordinary polarization (in contrast to ordinary polarization, as defined for birefringent materials) has a Poynting vector that does not coincide with the wave vector. The phenomenon is *per se* well-known and measures are often taken to avoid the effects of spatial walk-off in non-linear conversion processes.

Preferably, the non-linear element is monolithic, thereby reducing the number of optical interfaces. The fundamental laser light may then enter the monolithic non-linear element at an entrance side of the non-linear element, and the generated UV laser light may exit the non-linear element an exit side of the non-linear element. Since the frequency-conversion, i.e., generation of UV laser light, only takes place in the first portion of the non-linear element, the walk-off between the fundamental laser light and the UV laser light caused by the non-linear element has the effect that non-converted fundamental laser light remaining at the exit side of the non-linear element will exit at a location that is spatially separate from the location where the UV laser light exits the non-linear element.

The walk-off between the fundamental laser light and the UV laser light during propagation through the non-linear element is present throughout the non-linear element, both in the first and in the second portion. UV laser light generated in different sections of the first portion of the non-linear element will thus have experienced different amounts of walk-off when reaching the exit side of the non-linear element. The transversal shape (i.e. the "spot") of the generated UV laser light that exits the non-linear element will therefore typically be highly elliptical/astigmatic or otherwise elongated along the walk-off direction. A substantially circular transversal shape can, however, be recreated in a straightforward manner using suitable optics, as generally known in the art. Preferably, the spatially separated locations where the fundamental laser light and the UV laser light, respectively, exit the non-linear element are non-overlapping. Non-overlapping in this context may be that the full width at half maximum (FWHM) of the fundamental laser light and the UV laser light are non-overlapping.

An apparatus for conversion of the fundamental laser light into UV laser light may advantageously be resonant for the fundamental laser light.

The proposed way to address UV induced deposits may be advantageous because it does not need to entail an increased number of optical interfaces. The solution does not require complicated optical set-ups, and the conversion process can be conveniently temperature tuned.

Although the teachings presented herein can be applied for any frequency-converted laser, it will be of particular utility for frequency conversion to wavelengths shorter than about 400 nm, where the problem of laser-induced contamination becomes more pronounced.

The non-linear element used in embodiments may be any element that exhibits walk-off between the fundamental wave and the frequency-converted wave. Suitable examples include beta barium borate (BBO, β-BaB₂O₄), lithium triborate (LBO, LiB₃O₅), cesium lithium borate (CLBO, CsLiB₆O₁₀), bismuth triborate (BiBO, BiB₃O₆) and potassium dihydrogen phosphate (KDP, KH₂PO₄). For generation of UV light, considerations should also be made regarding transparency and optical tolerance (resistance to UV light), as well as available phase-matching spectrum, which may favor BBO and CLBO for deep UV generation (e.g. 266 nm).

The temperature tolerance for phase-matching is typically a few degrees, e.g. around 6°C for a 1 cm long non-linear crystal. In general, the temperature tolerance is inversely proportional to the crystal length. Outside of the tolerance for phase-matching, generated frequency-converted light will not successively build up along the non-linear crystal, but rather cancel as an overall effect. In simple terms, it can be seen as if frequency-converted light generated at one point in the crystal will interfere destructively with frequency-converted light generated at another point in the crystal, and thus cancel. Conversely, phase-matching means that all frequency-converted light is in-phase and therefore adds constructively. In embodiments of the present invention, it may be preferred to have a temperature difference between the first and second portions of the non-linear element that is considerably larger than a few degrees in order to make sure that phase-matching is not achieved in the second portion of the non-linear element even if other factors such as the ambient temperature would vary slightly. Thermal contact between the non-linear crystal and temperature control elements attached to the crystal is normally very good, and the non-linear crystal itself is normally a comparatively poor thermal conductor, which allows temperature differences along a centimeter-long non-linear crystal of several tens of degrees. For example, in a non-linear crystal that is 1-2 cm long, a temperature difference of 30°C can be readily maintained.

The length of the first portion, in which a temperature providing phase-matching is maintained, is not a crucial parameter. Even in embodiments where the first portion is comparatively long, such that a very astigmatic frequency-converted beam is obtained, subsequent beam shaping can still provide a substantially circularly symmetric spot. The length of the second portion should be sufficient in order for the spatial walk-off to separate the fundamental-frequency beam(s) from the frequency-converted beam. As a guideline, the propagation length in the second portion of the non-linear crystal times the tangent of the walk-off angle should be greater than the diameter of the or each fundamental-frequency beam.

Further, the overall length of the non-linear crystal can be selected based on practical considerations, as long as a temperature difference between two portions as discussed herein can be maintained. For example, a non-linear crystal having a comparatively small cross-section (transverse to the light beams) can maintain the requisite temperature difference even if the crystal is comparatively short. The length of the non-linear crystal can, for example, be at least 5 mm, or at least 1 cm, or at least 1.5 cm, or at least 2 cm.

As will be appreciated, the inventive principles disclosed herein can be applied to extra-cavity frequency conversion (wherein the fundamental-frequency beam is injected into the frequency-conversion cavity) as well as intra-cavity frequency conversion (wherein the fundamental-frequency beam is generated in the frequency-conversion cavity). The inventive principles are primarily advantageous in connection with frequency conversion processes within cavities where the fundamental-frequency beam is resonant.

### Brief description of the drawings

In the detailed description below, reference is made to the accompanying drawings, on which:
Fig. 1 schematically shows a ring cavity arrangement for extra-cavity frequency conversion;
Fig. 2 schematically shows a standing-wave cavity arrangement for extra-cavity frequency conversion;
Fig. 3 schematically shows a bow-tie ring cavity arrangement for extra-cavity frequency conversion;
Fig. 4 schematically shows a ring cavity arrangement for intra-cavity frequency conversion;
Fig. 5 schematically shows a bow-tie ring cavity arrangement for intra-cavity frequency conversion; and
Fig. 6 illustrates steps of a method according to the principles disclosed herein.

On the drawings, like parts are designated using the same reference numerals throughout.

### Detailed description

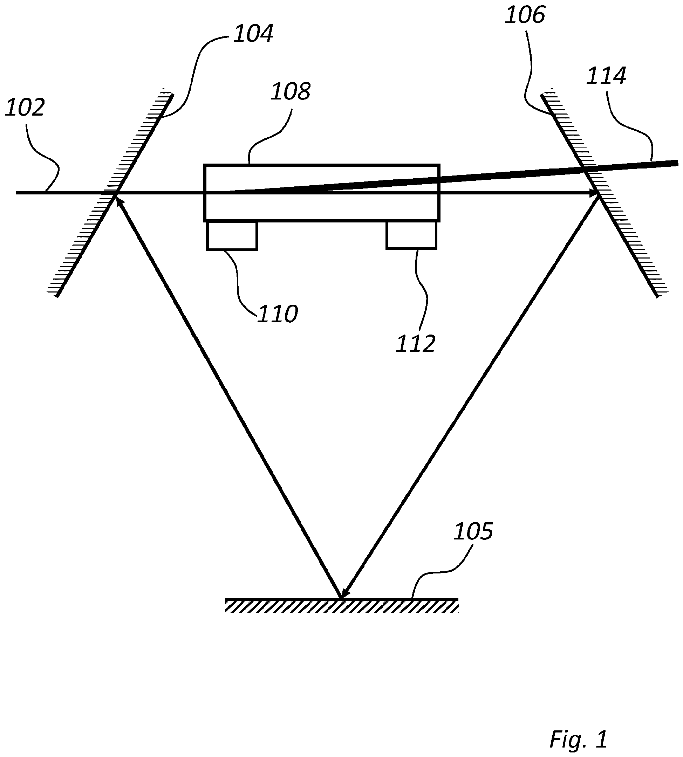

Fig. 1 schematically shows a frequency conversion apparatus according to the principles disclosed herein. At least one fundamental-frequency wave 102 is fed into a cavity defined by first, second and third mirrors 104, 105 and 106. The first, second and third mirrors are highly reflective for the or each fundamental-frequency wave to provide resonance conditions within the cavity, while one mirror, indicated at mirror 106 in Fig. 1, is highly transparent for the frequency-converted wave to provide frequency-converted output 114. The example illustrated in Fig. 1 is a singly-resonant cavity for frequency conversion, meaning that the cavity is resonant for a fundamental-frequency wave but not for the frequency-converted wave. Resonant frequency conversion enhances the conversion efficiency since non-converted light of the fundamental frequency is recycled inside the cavity. This also relaxes the intensity requirement for the fundamental-frequency wave fed into the cavity.

As generally known in the art, the cavity is fed/pumped by an external laser of the fundamental frequency through one of the cavity mirrors (mirror 104 in the example of Fig. 1). The laser power that is coupled to the cavity mode can be maximized by using both mode matching and impedance matching. Mode matching is a condition where the beam parameters (location of beam waist, beam size, and divergence) of the external laser beam fed into the cavity are matched to the corresponding beam parameters of the cavity mode. Impedance matching is a condition that is achieved when the transmission at the in-coupling mirror matches all other losses in the cavity, which minimizes the loss via back-reflection of the pump beam at the highly reflective in-coupling cavity mirror.

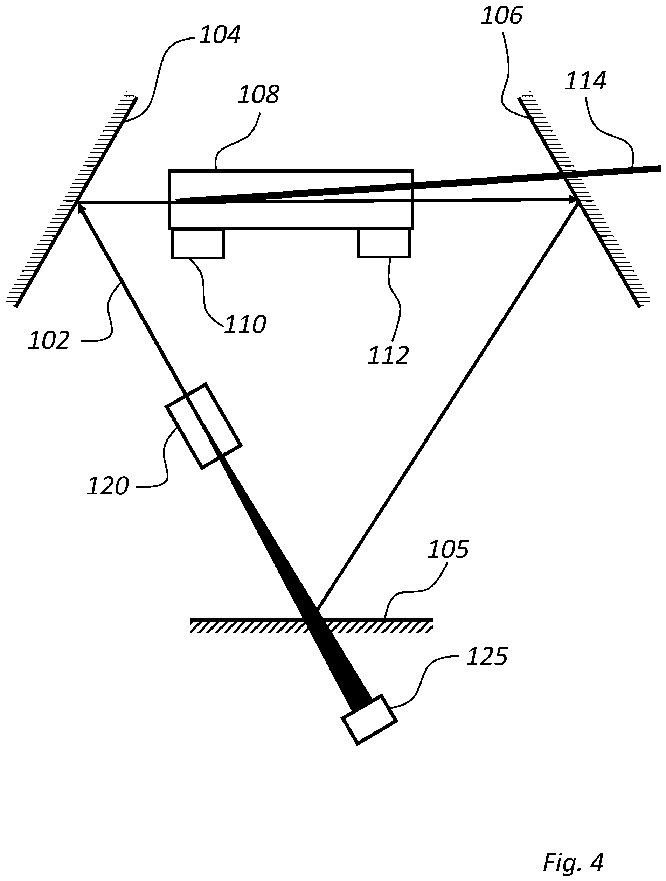

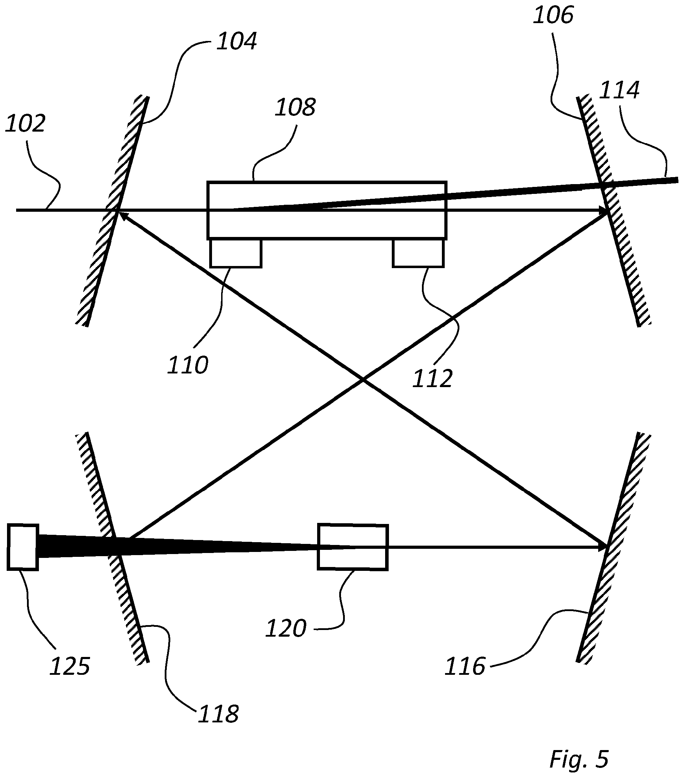

The principles disclosed herein can also be used in connection with intra-cavity frequency conversion, as will be briefly discussed below with reference to Figs. 4 and 5.

A non-linear element 108 is positioned in the cavity defined by the mirrors 104, 105, 106 such that a resonant mode of the or each fundamental-frequency wave 102 passes through the non-linear element for generation of the frequency-converted wave 114. As understood by the skilled person, a single fundamental-frequency wave can be used for frequency doubling, while two fundamental-frequency waves can be used for sum-frequency generation. The non-linear element is a birefringent element that exhibits spatial walk-off between the fundamental-frequency wave(s) and the frequency-converted wave. Preferred materials for the non-linear element include BBO and CLBO, although other materials as discussed above can also be used. Temperature controllers, such as thermo-electric controllers (TECs) 110, 112, are provided in thermal contact with the non-linear element 108. The TECs are configured to maintain a first portion of the non-linear element at a temperature that provides phase-matching for conversion of the fundamental-frequency wave(s) into the frequency-converted wave and to maintain a second portion of the non-linear element at a temperature that does not provide phase-matching for the conversion. Hence, frequency conversion will take place in the first portion where phase-matching is provided, but not in the second portion. The frequency-converted wave generated in the first portion will thus become spatially separated from the fundamental-frequency wave during propagation through the second portion, where phase-matching for conversion is not provided. The fundamental-frequency wave(s) and the frequency-converted wave will thus exit the non-linear element, and will strike the output mirror 106, at spatially separated locations as shown in Fig. 1. Although two TECs are shown in Fig. 1, a single temperature controller may be sufficient depending on the ambient temperature.

Any laser-induced contamination caused by the frequency-converted wave on the exit side of the non-linear element 108 and on the output mirror 106 will thus be formed at locations that are spatially separate from the fundamental-frequency wave(s).

The implementation shown in Fig. 1 comprises a ring-resonator for the fundamental-frequency wave (or at least one of the fundamental-frequency waves) An advantage of such ring-resonator is that the fundamental-frequency wave(s) can be made to resonate in one direction only as indicated by the arrows in Fig. 1, thus passing the non-linear element 108 in one direction only, which provides generation of the frequency-converted wave in one direction only thus facilitating outcoupling and maximizing power and conversion efficiency for the frequency-converted wave.

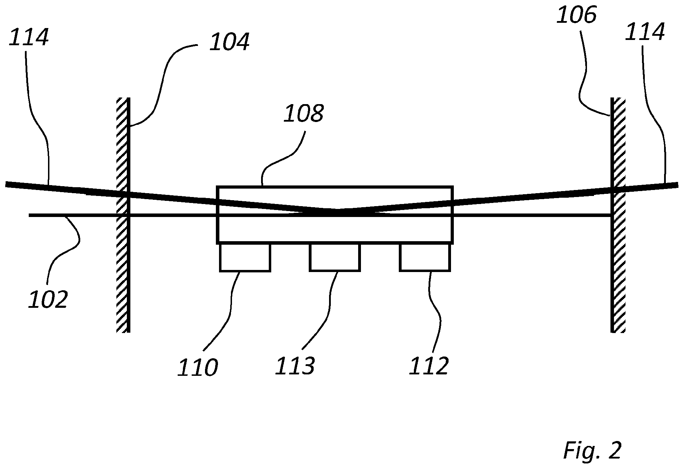

An alternative configuration is schematically shown in Fig. 2, comprising a standing wave cavity rather than a ring cavity for the fundamental-frequency wave(s). In a standing wave cavity, the frequency-converted wave will be generated in both directions in the non-linear element. Therefore, in order to separate the frequency-converted wave from the fundamental-frequency wave(s), the first portion of the non-linear element, i.e. the portion providing phase-matching for the frequency conversion, is positioned in the middle of the non-linear element or at least away from the end portions thereof. Thereby, portions at each end of the non-linear element in the propagation direction of the fundamental-frequency wave(s) do not provide phase-matching and thus no frequency-converted radiation is generated in these portions. Similar to the situation for the ring cavity shown in Fig. 1, a standing wave cavity can thereby provide the sought walk-off between the fundamental-frequency wave(s) and the frequency-converted wave before any optical interface is reached, thereby mitigating the problems of laser-induced contamination as discussed above. In order to provide the required temperature profile in the non-linear element, a temperature controller 113 may be provided for controlling the temperature away from the ends of the non-linear element, e.g. in the middle thereof. As will be understood, and depending on the ambient temperature, the temperature controllers 110, 112 at the ends of the non-linear element may not always be required. It can even be envisaged that the ambient temperature and the phase-matching temperature of the non-linear element are such that the temperature controller 113 in the middle of the non-linear element is not required, i.e. that the temperature controllers 110, 112 at the ends thereof suffice. The only requirement is that a temperature profile can be maintained in the non-linear element such that phase matching is only achieved in a first portion thereof away from its ends.

In general, the temperature control elements used for obtaining the required temperature profile in the non-linear element can be of any suitable kind, and do not need to be thermoelectric elements. For example, the temperature controllers could alternatively be resistive heaters. Further, the number of temperature controllers is not decisive as long as the required temperature profile in the non-linear element can be maintained.

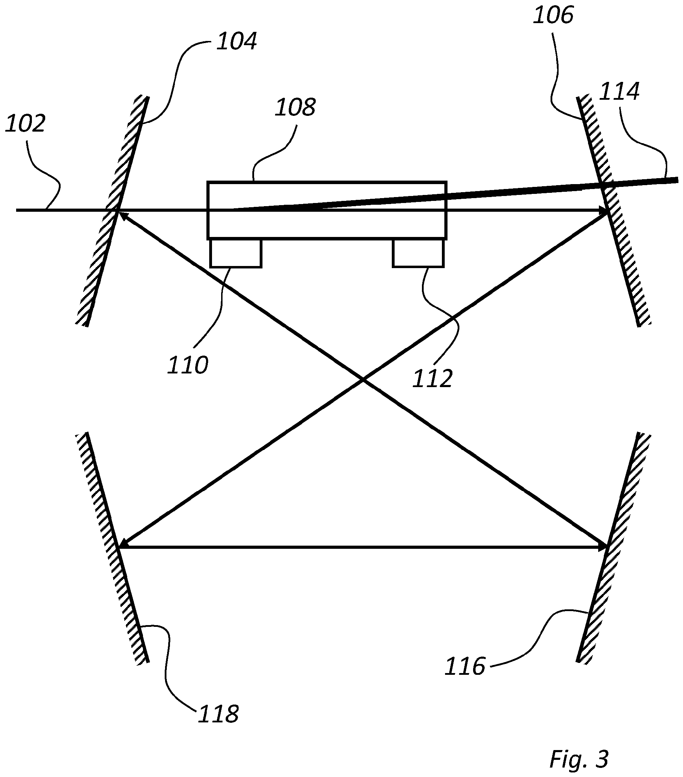

An alternative configuration for a ring cavity is schematically shown in Fig. 3, where the cavity is defined by four mirrors 104, 106, 116, 118. This cavity geometry is sometimes referred to as a bow-tie cavity. Here, mirror 104 functions as the in-coupling mirror for the fundamental-frequency beam(s) 102 and mirror 106 functions as the out-coupling mirror for the frequency-converted beam 114. The other two cavity mirrors 116 and 118 are both highly reflective for the fundamental-frequency beam(s). One or more of the mirrors 104, 106, 116, 118 may be curved to assist in stabilizing the cavity mode and/or to provide a beam waist inside the non-linear element 108.

In other configurations, at least one fundamental-frequency beam is generated within the resonant cavity using a gain element, one example being schematically shown in Fig. 4. The gain element for generating the fundamental-frequency beam is shown at reference numeral 120. The gain element 120 may for example be optically pumped using a diode laser 125. Pump light from the diode laser 125 may be focused through one of the cavity mirrors, e.g. cavity mirror 105 as indicated in Fig. 4, into the gain element 120. Fig. 5 schematically shows intra-cavity frequency conversion in a bow-tie cavity similar to that shown in Fig. 3, where the gain element 120 for the fundamental-frequency beam is optically pumped through cavity mirror 118 using diode laser 125. Intra-cavity frequency-conversion is *per se* well-known to the skilled person and need not be described in greater detail here. As will be readily understood, intra-cavity frequency-conversion can also be effected in a standing-wave cavity of the kind schematically shown in Fig. 2 by introduction of a gain element and optical pumping similar to what is shown in Figs. 4 and 5.

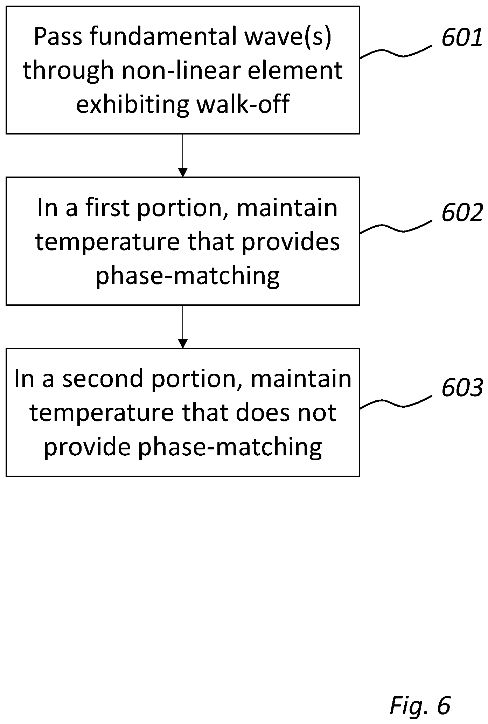

The principles disclosed herein may also be embodied in terms of method steps, as illustrated in Fig. 6. At least one fundamental-frequency wave is passed 601 through a non-linear element that exhibits spatial walk-off. A first portion of the non-linear element is maintained 602 at a temperature that provides phase-matching for a desired non-linear process converting the fundamental-frequency wave into a frequency-converted wave. A second portion of the non-linear element is maintained 603 at a temperature that does not provide phase-matching for the desired non-linear process. In this manner, the frequency-converted wave is generated in the first portion, and a separation between the fundamental-frequency wave and the fundamental frequency wave is effected by the spatial walk-off during propagation through the second portion of the non-linear element. Thereby, the fundamental-frequency wave and the frequency-converted wave will exit the non-linear element (as well as traverse other optical interfaces) at separate locations. Any laser-induced contamination caused by the frequency-converted wave will thus not interfere with, i.e. will not introduce losses for, the fundamental-frequency wave. The resonance for the fundamental-frequency wave inside the resonant cavity is thereby protected from the detrimental effects of laser-induced contamination caused by the frequency-converted wave.

## Claims

1. A frequency conversion apparatus for conversion of one or more fundamental-frequency waves into a frequency-converted wave, the frequency conversion apparatus comprising:
a non-linear element exhibiting spatial walk off between the fundamental-frequency wave(s) and the frequency-converted wave; and
at least one temperature control element configured to maintain a first portion of the non-linear element at a first temperature that provides phase matching for the conversion of the fundamental-frequency wave(s) into the frequency-converted wave, and to maintain a second portion of the non-linear element at a second temperature that does not provide phase matching for the conversion of the fundamental-frequency wave into the frequency-converted wave;
wherein the frequency-converted wave generated in the first portion of the non-linear element is spatially separated from the fundamental-frequency wave by spatial walk off such that the frequency-converted wave and a non-converted portion of the fundamental-frequency wave(s) exit the non-linear element at spatially separated locations.

2. The frequency conversion apparatus according to claim 1, wherein the non-linear element is monolithic.

3. The frequency conversion apparatus according to claim 1 or 2, wherein a wavelength of the frequency-converted wave is 415 nm or shorter.

4. The frequency conversion apparatus according to any one of the preceding claims, further comprising:
a cavity that is resonant for at least one of the one or more fundamental-frequency waves, wherein the non-linear element is located in the cavity.

5. The frequency conversion apparatus according to claim 4, further comprising:
an output coupler configured to extract at least a portion of the frequency-converted wave from the cavity.

6. The frequency conversion apparatus according to claim 4 or 5, wherein the cavity is a ring cavity.

7. The frequency conversion apparatus according to any one of the preceding claims, wherein a difference between the first temperature and the second temperature is at least 10 K, or at least 20 K, or at least 30 K.

8. The frequency conversion apparatus according to any one of the preceding claims, wherein the spatially separated locations are sufficiently separated so that the fundamental-frequency wave(s) and the frequency-converted wave are non-overlapping when exiting the non-linear element.

9. The frequency conversion apparatus according to any one of the preceding claims, wherein a length of the non-linear element is at least 5 mm, or at least 1 cm, or at least 1.5 cm, or at least 2 cm.

10. The frequency conversion apparatus according to any one of the preceding claims, wherein a length of the second portion of the non-linear element is longer than a diameter of the fundamental-frequency wave(s) divided by the tangent of the spatial walk-off angle.

11. The frequency conversion apparatus according to any one of the preceding claims, wherein a material of the non-linear element is selected from a group comprising: beta barium borate, BBO; lithium triborate, LBO; potassium dihydrogen phosphate, KDP; cesium lithium borate, CLBO and bismuth triborate, BiBO.

12. A method for conversion of a fundamental-frequency wave into a frequency-converted wave, the method comprising:
passing the fundamental-frequency wave through a non-linear element exhibiting spatial walk off between the fundamental-frequency wave and the frequency-converted wave;
in a first portion of the non-linear element, maintaining a first temperature that provides phase matching for the conversion of the fundamental-frequency wave into the frequency-converted wave; and
in a second portion of the non-linear element, maintaining a second temperature that does not provide phase matching for the conversion of the fundamental-frequency wave into the frequency-converted wave;
wherein the frequency-converted wave generated in the first portion of the non-linear element is spatially separated from the fundamental-frequency wave by spatial walk off in the first portion and the second portion of the non-linear element such that the frequency-converted wave and a non-converted portion of the fundamental-frequency wave exit the non-linear element at spatially separated locations.
